# EUROPEAN PATENT APPLICATION

(11) **EP 3 457 231 A1**
(43) Date of publication of application: **20.03.2019**
(21) Application number: 17191048.2
(22) Date of filing: 14.09.2017
(51) Int. Cl.: G05B 19/00, G06Q 10/00, G06Q 50/06, F03D 17/00, F03D 7/04

(54) **METHOD AND SYSTEM FOR DETECTION OF REMOTE CONTROL ERRORS IN WIND FARMS**

(71) Applicant: Deutsche Telekom AG, 53113 Bonn (DE); Technische Universität Berlin, 10623 Berlin (DE)
(72) Inventor: Roshandel, Mehran, 13591 Berlin (DE); Mashhadi Sohi, Soroush, 14195 Berlin (DE)
(74) Representative: Vossius & Partner Patentanwälte Rechtsanwälte mbB

(57) **Abstract**

Method and system for detection of a remote control error in a wind farm, wherein the wind farm is connected to a human machine interface, HMI, via a supervisory control and data acquisition, SCADA, network for remote control and monitoring, wherein at least one camera is provided at the wind farm, the wind farm comprises at least one of turbines, and all of the turbines of the wind farm are within the field of view of the at least one camera, wherein the camera is connected to a main controller at the human machine interface via a network different and independent from the SCADA network, wherein the method comprises capturing video data from the at least one camera, processing, in an image processing unit, the captured video data and extracting the rotational speed for each turbine of the wind farm based on the processed video data , transmitting the extracted rotational speed of each turbine to the main controller, performing in a plausibility check unit, preferably at the main controller, a plausibility check with operational data received via the SCADA network based on the extracted rotational speed for each turbine, and transmitting an error signal to the human machine interface based on the result of the plausibility check.

## Description

The invention relates to the field of automation of industrial machines and in particular relates to the monitoring of wind farms.

Industry 4.0 and Supervisory Control and Data Acquisition SCADA Networks are necessary to achieve the next level of automation in industrial applications. However, remote controlling and monitoring of the industrial processes also creates new vulnerabilities of the industrial infrastructures towards attacks, in particular towards cyber attacks on the underlying IT infrastructure.

Wind turbines in a wind farm are often connected to a network, preferably to the internet for monitoring and controlling purposes, e.g. at the so called human Machine interface HMI side as a remote controlling center. This however, raises the risk of cyber security threats, which is in particular critical, since wind farms are becoming a vital part of the energy infrastructure in many countries.

Therefore a cyber attack on a network connecting wind farms equals an attack on energy facilities and would cause vast consequences for the economy [1][2]. Dealing with cyber-attacks in structures of industrial networks such as Stuxnet and Night Dragon is a new challenge.

Applying ever more complex cyber security standards may improve the security temporally but do not solve the underlying security problem. It is a general concept of the invention to add a new factor to the SCADA security, in particular in the context of monitoring the rotational speed and produced energy of a wind turbine. This leads to prevention and to early detection of cyber-attacks.

Typical cyber-attacks manipulate the data on the way to a control center. The attacker or malware changes the transmitted data so intelligently that at the HMI side no fault would be detected. Therefore, the HMI side receives wrong data and may make the wrong decision based on the wrong data.

In [3] the rotational speed and the relative position deviation of a wind turbine are monitored with a camera. Image processing is used to obtain said information from the video. At night either lightening and/or the reflecting markers on the blades are needed.

In [4] a deformation in rotor blades of wind turbines is detected with help of laser scanning.

In [5] a deformation and vibration of the rotor blades of wind turbines is detected with help of installing camera and using digital image correlation. Random black and white dots are put on the blades to capture them by camera and to process them further. In [6] a condition of wind turbine is monitored with a camera and image processing methods to prevent a break down in the system and/or for early detection of physical faults.

In [7] a condition of a wind turbine is measured with a photogrammetric method.

It is therefore an objective of the invention to provide a method and system for detection of remote control errors in wind farms. This objective is achieved with the features of the subject-matter of independent claims 1 and 2. The dependent claims define preferred embodiments.

In the following description, the terms camera an image processing unit are used to describe any system of detecting, capturing, and processing of images regardless of whether or not a passive or active detection is used and whatever wavelength for detection is used.

The invention provides a method for detection of a remote control error in a wind farm. The wind farm is connected to a human machine interface, HMI, via a supervisory control and data acquisition, SCADA, network for remote control and monitoring. At least one camera is provided at the wind farm, the wind farm comprises at least one of turbines, and all of the turbines of the wind farm are within the field of view of the at least one camera. The camera is connected to a main controller at the human machine interface via a network different and independent from the SCADA network. The method comprises capturing video data from the at least one camera, processing, in an image processing unit, the captured video data and extracting the rotational speed for each turbine of the wind farm based on the processed video data ,transmitting the extracted rotational speed of each turbine to the main controller, performing in a plausibility check unit, preferably at the main controller, a plausibility check with operational data received via the SCADA network based on the extracted rotational speed for each turbine, and transmitting an error signal to the human machine interface based on the result of the plausibility check.
In one aspect of the invention the step of performing a plausibility check comprises comparing the extracted rotational speed with the operational data obtained via the SCADA network.

In one aspect of the invention the rotational speed of each wind turbine is measured based on image processing at HMI side and the rotation numbers are saved with a corresponding timestamp time in a log file and subsequently send to the plausibility check.

In one aspect of the invention, if the rotational speed obtained from the SCADA network deviates from the value which is obtained from image processing then an error is reported and an alarm is given to the staffs.

In one aspect of the invention the plausibility check unit is located at the main controller.

The invention further provides to a system for detection of a remote control error in a wind farm. The wind farm is connected to a human machine interface, HMI, via a supervisory control and data acquisition, SCADA, network for remote control and monitoring. The wind farm comprises at least one of turbines. The system comprises at least one camera being provided at the wind farm, all of the turbines of the wind farm are within the field of view of the at least one camera, and the at least one camera is connected to a main controller at the human machine interface via a network different and independent from the SCADA network.

The system comprises a video capturing unit configured to capture video data from the at least one camera. The system comprises an image processing unit configured to process the captured video data and to extract the rotational speed for each turbine of the wind farm based on the processed video data, and to transmit the extracted rotational speed of each turbine to a plausibility check unit, preferably formed at the main controller. The plausibility check unit is configured to perform a plausibility check with operational data received via the SCADA network based on the extracted rotational speed for each turbine and further configured to transmit an error signal to the human machine interface based on the result of the plausibility check.

In one aspect of the invention the plausibility unit is configured to compare the extracted rotational speed with the operational data obtained via the SCADA network.

In one aspect of the invention at least one camera is installed in or at the wind farm. The rotational speed of each wind turbine and a corresponding amount of produced energy is extracted by means of image processing of the video-data. This additional data provides the system on the Human Machine interface side at control center with a new value and allows to check the plausibility of the so called real value that is reported by the main controller on the wind turbine via the SCADA network.

The rotational speed allows for calculation of the amount of produced energy, this is very important for instance for the management layer of an energy network to reduce the produced energy from other resources. If this value is manipulated, it may cause serious consequences leading to a crash of the electricity distribution system.

The reported value of the rotational speed passes SCADA network to the HMI and this value may be attacked intelligently by a malware installed on a Programmable Logic Controller on the turbine station or malware injected into many devices in the way to the HMI.

According to the invention a comparison of the two values, one obtained from cameras and the other one obtained via the SCADA network, works as an early attack detector and may raise an alarm for the staffs in a remote control center.

Therefore the method and system raises the security of the whole automation system by means of providing additional value to be compared at the HMI side.

According to an embodiment of the invention the rotational speed of each wind turbine is measured based on image processing at HMI side and the rotation numbers are saved with a corresponding timestamp time in a log file and subsequently send to a plausibility check. If the rotational speed obtained from the SCADA network deviates from the value which is obtained from image processing then an error is reported and an alarm may be given to the staffs.

In one aspect of the invention a video signal from the camera is send via a network connection between the wind farm and the HMI and the image processing is performed on the HMI side of the network connection. In one aspect of the invention the image processing is performed on the wind farm side of the network connection and only derived data is transmitted via the network connection.. In the latter aspect the complete video signal is only transmitted when the plausibility check detects an inconsistency. In one aspect of the invention, an encrypted signal is transmitted between the wind farm and the HMI.

The invention will now be described in more detail with reference to the accompanying figures.
Fig. 1 shows an embodiment of the system according to an embodiment of the invention; and
Fig. 2 shows a block diagram of the system according to an embodiment of the invention.

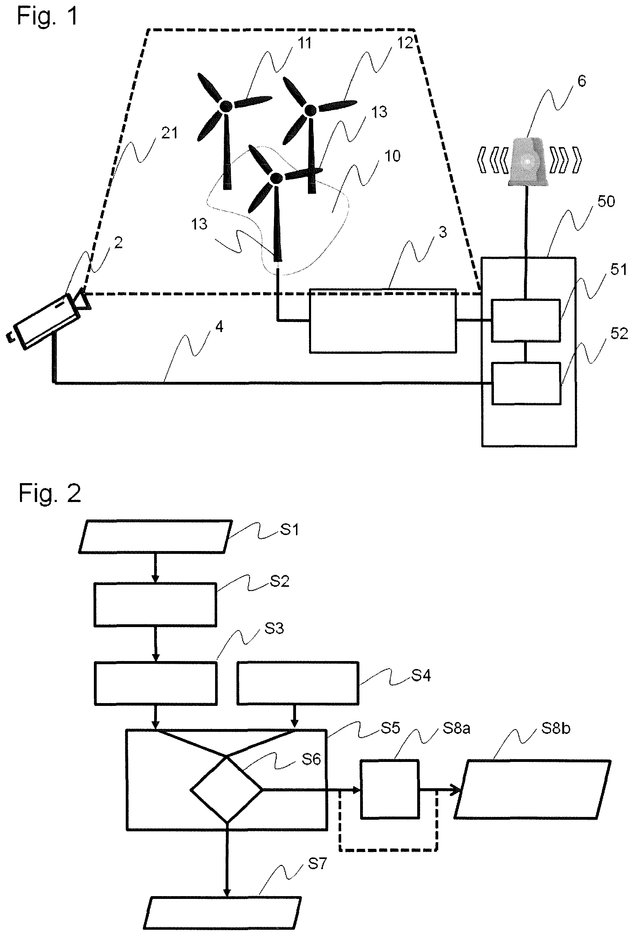

Fig. 1 shows an embodiment of the system according to an embodiment of the invention. The wind farm 10 is comprised of a plurality of wind turbines 11, 12, 13. Controlling signals of the wind turbines 11, 12, 13 and monitoring data is sent through the SCADA network 3 to the Human Machine Interface 50.

A camera center may comprise a plurality of cameras 2. The cameras 2 are configured to have a field of view 21 which covers all wind turbines 11, 12, 13. The number of installed cameras 2 may vary depending on the farm layout and the position of the wind turbines. SCADA network 3 connects the wind farm 10 to the internet, and also secures the connection. The system according to the invention receives on the HMI side data from the SCADA network 3.

The HMI system 50 collects all data from the wind farm 10 such as rotational speed of each turbine, control signals, faults, and amount of produced energy. The live videos from wind farm captured are transmitted via an independent network 4 and is accessible at the HMI 50. The video data is processed by the image processing unit 52.

The image processing unit 52, which is a part of the system according to the invention, captures the video data from the cameras and processes the video data. The skilled person is aware of different algorithms to extract the rotational speed from the video data.

The rotational speed of each wind turbine 11, 12, 13 is reported in a log file and it is send to a plausibility check unit 51. The plausibility check unit 51 may be a software unit at the HMI or may be provided with independent hardware. The plausibility check unit 51 checks whether the value of rotational speed provided by the SCADA network matches with the value obtained from image processing unit 52. If any disparity occurs, the plausibility check unit 51 reports an error and preferably sends an alarm signal to an alarm system 6. The alarm system 6 informs about the attack in the network. This embodiment of the system according to the invention serves as an early detection of cyber-attacks in SCADA network.

Fig. 2 shows a block diagram of the system according to an embodiment of the invention.

The captured video data (step S1) obtained from cameras 2 is processed (step S2) in the image processing unit 52.The image processing unit 52 extracts the rotational speed and/or the amount of produced energy of the each wind turbine and reports (step S3) the result to the plausibility check unit 51. In an embodiment of the invention the rotational speed of each wind turbine and/or a corresponding log file is reported (step S3) to the plausibility check unit 51.

In addition the so called real value of the rotational speed and/or the amount of produced energy of each wind turbine is extracted from the data obtained from SCADA network (step S4). A plausibility check is performed (step S5) in the plausibility check unit 51. If these both values are matching (step S6) then the normal state (step S7) is reported. If the both values are not matching (step S6) an error state is reported (step S8b) and /or an alarm (step S8a) is triggered.

In the following a simple scenario of an attack is described:

A wind turbine 11, 12, 13 is connected to a power distribution network and it produces 800 KW of energy at a rotational speed of 12 rpm. The amount of electrical power and rotational speed is submitted via the SCADA network to HMI center, where the data is monitored.

An attack happens on the SCADA network. The attacker manipulates the above data such that more energy, for instance 1200 KW, with corresponding rotational speed of 28 rpm is reported to the HMI. According to the allegedly available amount of wind energy a decision is made to lower the amount of energy obtained from a gas turbine which is also connected to the power distribution network.

However, because of the wrong data and consequently of wrong decision the power distribution network would be confronted with a low voltage and eventually crash may happen.

Using a system according to the invention such an attack would be detected: The control center would receive an alarm, since the value provided by the camera differs from the value obtained from SCADA Network.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

### List of References:

[1] T. Sommestad, G. N. Ericsson, and J. Nordlander, "SCADA system cyber security - A comparison of standards," in IEEE PES General Meeting, PES 2010, 2010.
[2] E. Johansson, T. Sommestad, and M. Ekstedt, "Issues of cyber security in SCADA-systems-On the importance of awareness," 20th Int. Conf. Electr. Distrib. CIRED, no. 969, pp. 1-4,2009.
[3] S. Korzhavin, S. Shcheklein, A. Zavyalov, K. Purtov, and V. Kublanov, "Universal computer vision system for monitoring the main parameters of wind turbines," in E3S Web of Conferences, 2016, vol. 6.
[4] M. Grosse-Schwiep, J. Piechel, and T. Luhmann, "Measurement of rotor blade deformations of wind energy converters with laser scanners," in Journal of Physics: Conference Series, 2014, vol. 524, no. 1, p. 12067.
[5] J. Winstroth, L. Schoen, B. Ernst, and J. R. Seume, "Wind turbine rotor blade monitoring using digital image correlation: a comparison to aeroelastic simulations of a multi-megawatt wind turbine," in Journal of Physics: Conference Series, 2014, vol. 524, no. 1, p. 12064.
[6] B. D. Lakshmi and K. Sujatha, "Image Processing for monitoring windmills."
[7] M. Ozbek, D. J. Rixen, O. Erne, and G. Sanow, "Feasibility of monitoring large wind turbines using photogrammetry," Energy, vol. 35, no. 12, pp. 4802-4811, 2010.

## Claims

1. Method for detection of a remote control error in a wind farm,
wherein the wind farm is connected to a human machine interface, HMI, via a supervisory control and data acquisition, SCADA, network for remote control and monitoring,
wherein at least one camera is provided at the wind farm, the wind farm comprises at least one of turbines, and all of the turbines of the wind farm are within the field of view of the at least one camera,
wherein the camera is connected to a main controller at the human machine interface via a network different and independent from the SCADA network,
wherein the method comprises
capturing video data from the at least one camera,
processing, in an image processing unit, the captured video data and extracting the rotational speed for each turbine of the wind farm based on the processed video data ,
transmitting the extracted rotational speed of each turbine to the main controller,
performing, in a plausibility check unit, a plausibility check with operational data received via the SCADA network based on the extracted rotational speed for each turbine, and
transmitting an error signal to the human machine interface based on the result of the plausibility check.

2. The method of claim 1, wherein the step of performing a plausibility check comprises comparing the extracted rotational speed with the operational data obtained via the SCADA network.

3. The method of claim 2, wherein the rotational speed of each wind turbine is measured based on image processing at HMI side and the rotation numbers are saved with a corresponding timestamp time in a log file and subsequently send to the plausibility check.

4. The method of claim 3, wherein, if the rotational speed obtained from the SCADA network deviates from the value which is obtained from image processing then an error is reported and an alarm is given to the staffs.

5. The method of any one of claims 1 to 4, wherein the plausibility check unit is located at the main controller.

6. System for detection of a remote control error in a wind farm,
wherein the wind farm is connected to a human machine interface, HMI, via a supervisory control and data acquisition, SCADA, network for remote control and monitoring,
the wind farm comprises at least one of turbines;
wherein the system comprises at least one camera being provided at the wind farm, all of the turbines of the wind farm are within the field of view of the at least one camera, and the at least one camera is connected to a main controller at the human machine interface via a network different and independent from the SCADA network,
wherein the system comprises a video capturing unit configured to capture video data from the at least one camera,
wherein the system comprises an image processing unit configured to process the captured video data and to extract the rotational speed for each turbine of the wind farm based on the processed video data, and to transmit the extracted rotational speed of each turbine to a plausibility check unit; and
wherein the plausibility check unit is configured to perform a plausibility check with operational data received via the SCADA network based on the extracted rotational speed for each turbine and further configured to transmit an error signal to the human machine interface based on the result of the plausibility check.

7. The system of claim 6, wherein the plausibility unit is configured to compare the extracted rotational speed with the operational data obtained via the SCADA network.

8. The system of claim 7, wherein the rotational speed of each wind turbine is measured based on image processing at HMI side and the rotation numbers are saved with a corresponding timestamp time in a log file and subsequently send to the plausibility check.

9. The system of claim 8, wherein, if the rotational speed obtained from the SCADA network deviates from the value which is obtained from image processing then the plausibility check unit is configured to report an error and to give an alarm to the staffs.

10. The system of any one of claims 6 to 9, wherein the plausibility check unit is located at the main controller.

## Amended claims

### Amended claims in accordance with Rule 137(2) EPC.

1. Method for detection of a remote control error in a wind farm,
wherein the wind farm is connected to a human machine interface, HMI, via a supervisory control and data acquisition, SCADA, network for remote control and monitoring,
wherein at least one camera is provided at the wind farm, the wind farm comprises at least one of turbines, and all of the turbines of the wind farm are within the field of view of the at least one camera,
wherein the camera is connected to a main controller at the human machine interface via a network different and independent from the SCADA network,
wherein the method comprises
capturing live video data from the at least one camera,
transmitting the captured live video via the independent network to the HMI,
processing, in an image processing unit at the HMI, the captured live video data and extracting the rotational speed for each turbine of the wind farm based on the processed video data,
transmitting the extracted rotational speed of each turbine to the main controller,
performing, in a plausibility check unit, a plausibility check with operational data received via the SCADA network based on the extracted rotational speed for each turbine, and
transmitting an error signal to the human machine interface based on the result of the plausibility check.

2. The method of claim 1, wherein the step of performing a plausibility check comprises comparing the extracted rotational speed with the operational data obtained via the SCADA network.

3. The method of claim 2, wherein the rotational speed of each wind turbine is measured based on image processing at HMI side and the rotation numbers are saved with a corresponding timestamp time in a log file and subsequently send to the plausibility check.

4. The method of claim 3, wherein, if the rotational speed obtained from the SCADA network deviates from the value which is obtained from image processing then an error is reported and an alarm is given to the staffs.

5. The method of any one of claims 1 to 4, wherein the plausibility check unit is located at the main controller.

6. System for detection of a remote control error in a wind farm,
wherein the wind farm is connected to a human machine interface, HMI, via a supervisory control and data acquisition, SCADA, network for remote control and monitoring,
the wind farm comprises at least one of turbines;
wherein the system comprises at least one camera being provided at the wind farm, all of the turbines of the wind farm are within the field of view of the at least one camera, and the at least one camera is connected to a main controller at the human machine interface via a network different and independent from the SCADA network,
wherein the system comprises a video capturing unit configured to capture live video data from the at least one camera and to transmit the captured live video via the independent network to the HMI,
wherein the system comprises an image processing unit at the HMI configured to process the captured video data and to extract the rotational speed for each turbine of the wind farm based on the processed video data, and to transmit the extracted rotational speed of each turbine to a plausibility check unit; and
wherein the plausibility check unit is configured to perform a plausibility check with operational data received via the SCADA network based on the extracted rotational speed for each turbine and further configured to transmit an error signal to the human machine interface based on the result of the plausibility check.

7. The system of claim 6, wherein the plausibility unit is configured to compare the extracted rotational speed with the operational data obtained via the SCADA network.

8. The system of claim 7, wherein the rotational speed of each wind turbine is measured based on image processing at HMI side and the rotation numbers are saved with a corresponding timestamp time in a log file and subsequently send to the plausibility check.

9. The system of claim 8, wherein, if the rotational speed obtained from the SCADA network deviates from the value which is obtained from image processing then the plausibility check unit is configured to report an error and to give an alarm to the staffs.

10. The system of any one of claims 6 to 9, wherein the plausibility check unit is located at the main controller.
